**Europäisches Patentamt**

(19) **European Patent Office**

**Office européen des brevets**

(11) Veröffentlichungsnummer : **0 331 666 B1**

# EUROPÄISCHE PATENTSCHRIFT

(12)

(45) Veröffentlichungstag der Patentschrift :
30.10.91 Patentblatt 91/44

(51) Int. Cl.$^5$ : **C04B 18/28**

(21) Anmeldenummer : **89890005.5**

(22) Anmeldetag : **10.01.89**

(54) **Verfahren zur Behandlung von Zellulosefasern sowie Faserzementprodukte und Mischungen zu ihrer Herstellung.**

(30) Priorität : **18.02.88 AT 384/88**

(43) Veröffentlichungstag der Anmeldung :
**06.09.89 Patentblatt 89/36**

(45) Bekanntmachung des Hinweises auf die
Patenterteilung :
**30.10.91 Patentblatt 91/44**

(84) Benannte Vertragsstaaten :
**AT BE CH DE ES FR GB GR IT LI LU NL SE**

(56) Entgegenhaltungen :
**EP-A- 0 015 538**
**AT-B- 364 304**
**GB-A- 269 845**
**GB-A- 2 170 234**
**US-A- 3 311 483**

(73) Patentinhaber : **Eternit-Werke Ludwig
Hatschek AG
A-4840 Vöcklabruck (AT)**
(84) Benannte Vertragsstaaten :
**CH LI LU SE AT**

Patentinhaber : **REDCO SA
Kuiermanstraat 1
B-2920 Kapelle-op-den-Bos (BE)**
(84) Benannte Vertragsstaaten :
**BE DE ES GB GR NL**
Patentinhaber : **S.A. Financière Eternit
33, rue d'Artois
F-75008 Paris (FR)**
(84) Benannte Vertragsstaaten :
**FR IT**

(72) Erfinder : **Miko, Hans-Jürgen, Dipl.-Ing.
Kogl 7,
A-4210 Unterweitersdorf (AT)**
Erfinder : **Kirchmayr, Karl, Dipl.-Ing.
Am Pfarrerfeld 52
A-4840 Vöcklabruck (AT)**
Erfinder : **Hüttner, Gerhard, Dipl.-Ing.
Redl 16,
A-4871 Zipf (AT)**
Erfinder : **Watzka, Bruno
Maximilianstrasse 4
A-4840 Vöcklabruck (AT)**

(74) Vertreter : **Collin, Hans, Dipl.-Ing. Dr. et al
Patentanwälte Dipl.-Ing. Dr. Hans Collin
Dipl.-Ing. Erwin Buresch Dipl.-Ing.Armin Häupl
Mariahilferstrasse 50
A-1070 Wien (AT)**

EP 0 331 666 B1

## Beschreibung

Die Erfindung betrifft ein Verfahren zur Behandlung von Zellulosefasern, insbesondere Zellstoff, in wässeriger Aufschlämmung mit feinteiliger, vorzugsweise kondensierter, Kieselsäure sowie unter Verwendung derart vorbehandelter Fasern hergestellte Faserzementprodukte und Mischungen zu ihrer Herstellung.

Der Einsatz von feinteiliger Kieselsäure und auch kondensierter amorpher Kieselsäure, wie sie als staubförmiges Nebenprodukt bei verschiedenen hüttenmännischen Verfahren anfällt, bei der Herstellung von Faserzementerzeugnissen ist bekannt. Ebenso bekannt ist der Einsatz von verschiedenen Zellulosefasern, unter anderem Zellstoff, in Faserzementprodukten, wo unbehandelte Zellulosefasern hauptsächlich die Rolle von Filterfasern zur Zementretention beim Naßherstellungsverfahren spielen.

Es sind auch schon verschiedene Verfahren bekannt geworden, nach denen für den Einsatz in Faserzementprodukten vorgesehene Zellulosefasern zur Verbesserung ihrer Eigenschaften vorbehandelt werden. Unter anderem ist es bekannt, Zellulosefasern dazu mit Holzschutzmitteln zu tränken, durch Tränkung mit Kieselsäurelösungen die Fasern zu verkieseln oder tertiäre Phosphate auf den Fasern abzulagern.

In der GB-A 2170234 ist ein Verfahren beschrieben, bei dem Fasermaterial und andere Verstärkungsmaterialien für Faserzementprodukte mit amorpher kondensierter Kieselsäure behandelt werden. Diese Kieselsäure wird auch als Kieselsäurerauch bezeichnet und wird im englischen Sprachgebrauch mit CSF und im deutschen Sprachgebrauch mit KSS abgekürzt. Nach dem bekannten Verfahren werden Fasern aus Glas, Kohlenstoff oder Metall sowie organische Fasern behandelt ; Zellulosefasern sind in der Druckschrift nicht erwähnt. Die Fasern werden dazu bevorzugt in eine KSS-Aufschlämmung eingebracht, als andere Möglichkeiten sind das Aufsprühen oder Aufwalzen der Aufschlämmung auf das Fasermaterial genannt.

Mit dem Ziel des besseren Eindringens der KSS-Partikel in die Faserzwischenräume — die GB-A 2170234 bezieht sich sachlich praktisch nur auf Glasfaserprodukte wie Rovings — enthält die KSS-Aufschlämmung vorteilhaft etwa 0,5 bis etwa 40 Masse-% eines Dispergiermittels in Form von handelsüblichen Zementverflüssigern. Es wird angegeben, daß ein gutes Eindringen der KSS-Partikel in die Faserzwischenräume der Faserbündel erzielt wird und auch viele KSS-Partikel an der Strangoberfläche anhaften.

Bei der Anwendung dieses Verfahrens auf Zellulosefasern zeigt sich jedoch, daß das Anhaften einer ausreichenden KSS-Menge an der Faseroberfläche nicht erreicht wird.

Überraschenderweise wurde nunmehr gefunden, daß eine sehr gute Faserbedeckung, die bis zum vollständigen Überziehen der Fasern gehen kann, dann möglich ist, wenn die Zellulosefasern alkalisch vorbehandelt werden.

Das erfindungsgemäße Verfahren ist demgemäß vor allem dadurch gekennzeichnet, daß die Zellulosefasern in einer alkalischen Lösung aufgeschlämmt, Kieselsäure zugegeben und nach deren Verteilung in der Aufschlämmung durch Zugabe eines Polyelektrolyten an und gegebenenfalls in den Fasern fixiert werden.

Es wird angenommen, daß eine Fixierungsreaktion an der Oberfläche und im Inneren der Zellulosefasern eintritt. Es werden bereits gute Ergebnisse ohne Polyelektrolytzugabe erzielt, bevorzugt ist jedoch die Zugabe eines im alkalischen Milieu flockenden Polyelektrolyten, der an die Zellulosefasern bindet und dabei KSS-Teilchen mitreißt.

Bevorzugt wird eine alkalische Lösung eingesetzt, die einen pH-Wert im Bereich von 10 bis 13 aufweist.

Dabei ist es besonders günstig, wenn in der alkalischen Lösung Kalziumionen vorhanden sind, wobei der Gehalt am besten im Bereich von 800 bis 1200 mval liegt. Es wird angenommen, daß an den Zellulosefasern und in der Lösung eine Kalziumsilikatbildung auftritt, die ebenfalls zu einer besseren Bedeckung der Zellulosefasern führt.

Als flockender Polyelektrolyt wird vorzugsweise ein bekannter anionischer Polyelektrolyt eingesetzt. Günstig wird dabei mindestens eine Verbindung aus der Gruppe enthaltend wasserlösliche und in Wasser emulgierbare Polymere eingesetzt, insbesondere mindestens eine Verbindung aus der Gruppe enthaltend Alginate, Polyacrylate, Polyacrylamide, Polyvinylalkohol, Polysaccharide und Polypeptide.

Bevorzugt sind wasserlösliche, mindestens teilweise verseifte Polyacrylamide und Acrylatcopolymeremulsionen.

Derartige Polyelektrolyte sind zum Flocken von verdünnten Faser/Zementsuspensionen bereits bekannt.

Bei der erfindungsgemäßen Zellulosefaserbehandlung wird günstig der Feststoffgehalt in der Aufschlämmung auf 5 bis 30 g/l eingestellt.

Als feinteilige Kieselsäure wird bevorzugt handelsübliche kondensierte, amorphe Kieselsäure eingesetzt mit einem $SiO_2$-Gehalt zwischen 70 und 90% und einer spezifischen Oberfläche von 10 bis 25 $m^2/g$ ; günstig in einem Massenverhältnis Kieselsäure : Zellulosefasern von 2 : 1 bis 3 : 1.

Die Zellulosefasern können — wie bekannt — von Hölzern oder Einjahrespflanzen stammen, z.B. von Flachs, Sisal oder Hanf.

Wird Zellstoff eingesetzt, so vorzugsweise Kiefern-Sulfatzellstoff. Der Zellstoff wird vorteilhaft vor und/oder

2

während seiner Aufschlämmung in der alkalischen Lösung auf 18 bis 60°SR, vorzugsweise auf 25 bis 40°SR, aufgemahlen ; d.h. man kann auch aufgemahlenen Stoff in die alkalische Lösung einbringen ; bevorzugt wird jedoch der Zellstoff in der alkalischen Lösung aufgemahlen. Als alkalische Lösung wird günstig das in Faserzement-Naßanlagen anfallende sogenannte Maschinenwasser eingesetzt, das etwa folgende Ionenbeladung aufweist :

2000-4000 mval $Na^+$
3000-8000 mval $K^+$
800-1200 mval $Ca^{++}$
3000-8000 mval $SO_4^{--}$

Der Eindampfrückstand beträgt 2 bis 25 g/l.

Überraschenderweise wurde gefunden, daß beim erfindungsgemäßen Verfahren eine weitaus höhere Alkalistabilität der Zellulosefasern erzielt wird als bei Verwendung von Leitungswasser als Aufschlämm-Medium.

Durch den Einsatz geeigneter Flockungs- oder Retentionsmittel kann auch eine Lumenbeladung der Zellulosefasern mit KSS erzielt werden.

Eine besonders bevorzugte Ausführungsform des erfindungsgemäßen Verfahrens ist wie folgt :
— Aufmahlen des Zellstoffs in alkalischer Salzlösung (Mahlgrad 30-60°SR), Stoffkonzentration 1-3%,
— Suspendierung von KSS in alkalischer Salzlösung oder teilneutralisiertem Abwasser, Feststoffgehalt 5-20%,
— Zusatz der KSS-Suspension zur Suspension des gemahlenen Zellstoffs (Zusatzmenge 200-300% KSS, bezogen auf trockenen Zellstoff),
— intensives Rühren der Mischung (2-8 min),
— Zusatz von 0,005-0,1% eines geeigneten, im alkalischen Bereich wirksamen Flockungs- oder Retentionsmittels,
— intensives Rühren der Mischung (1-2 min).

Die $Ca^{++}$-Beladung der alkalischen Salzlösung ist etwa 1000 mval.

Im folgenden Beispiel 1 wird der Einfluß der erfindungsgemäßen KSS-Beladung an Hand der Reißfestigkeit (Zero-Span-Test) von aus den behandelten Zellulosefasern gebildeten Papierblättern (Flächengewicht 60 g/m²) in einem Alterungsverfahren bestimmt, das aus aufeinanderfolgenden Prüfzyklen besteht. Jeder Prüfzyklus ist wie folgt : Bildung einer Suspension aus vorher erfindungsgemäß behandelten Fasern in alkalischer Salzlösung, Lagerung der Suspension in verschlossenem Behälter bei 60°C (72 h), Filtration, Trocknung bei 60°C unter Frischluftzufuhr (24 h). Nach jedem Zylkus wird ein Papierblatt gebildet und auf Festigkeit geprüft.

Beispiel 1 :

a) 511 g (atro) ungebleichten Sulfatzellstoffs wurden in 5 l Maschinenwasser (gesättigtes Fabrikationswasser aus der Faserzementproduktion, pH 12,5) eingeweicht, nach 4 h mit weiteren 18 l Maschinenwasser versetzt und im Laborholländer auf einen Mahlgrad von 35°SR gemahlen.

Mit Hilfe eines Dissolvers wurde eine Suspension von 1000 g KSS in 4000 ml Maschinenwasser hergestellt. Zu 1 l Zellstoffsuspension wurden 220 g KSS-Suspension zugesetzt und die Mischung 5 min lang mit dem Dissolver intensiv gerührt. Dann wurden 5 ml einer 0,2%-Lösung des Retentionsmittels Cartaretin® 532 * zugesetzt und weitere 2 min intensiv gerührt.

* Cartaretin 532 ist ein anionisches Polyacrylamid

Die so hergestellte Suspension wurde mit Maschinenwasser auf einen Zellstoffgehalt von 10 g/l verdünnt und dem oben angeführten Alterungstest unterworfen. Als Vergleichsprobe diente ein in Leitungswasser auf 35°SR aufgemahlener, unter Zusatz des gleichen Flockungsmittels mit KSS behandelter Zellstoff.

Zugfestigkeitsindex ZFI (Nm/g)
bei Zero-Span-Prüfung naß :

| Prüfzyklen | erfindungsgemäß | Vergleich |
|---|---|---|
| 0 | 142 | 138 |
| 4 | 99 | 53 |
| 10 | 72 | 16 |

b) In gleicher Weise wie unter a) wurde Zellstoff aufgemahlen und mit KSS behandelt, nur wurde anstelle von Maschinenwasser ein teilweise neutralisiertes Abwasser der Kläranlage (pH-Wert 10,5, Gesamtsalzgehalt 2 g/l) für die Herstellung der Zellstoff- und der KSS-Suspension benutzt. Für den Alkalistabilitätstest wurde ebenfalls dieses Wasser herangezogen.

Zugfestigkeitsindex ZFI (Nm/g)

bei Zero-Span-Prüfung naß :

| Prüfzyklen | erfindungsgemäß | Vergleich |
|---|---|---|
| 0 | 150 | 138 |
| 4 | 93 | 53 |
| 10 | 62 | 16 |

Man erkennt, daß die Zugfestigkeit der aus erfindungsgemäß in einer alkalischen Salzlösung mit KSS beladenen Zellulosefasern gebildeten Papierblätter, mithin die Alkalistabilität der Zellulosefasern, weitaus höher ist als beim Einsatz von Leitungswasser bei der Beladung.

In den folgenden Beispielen 2 und 3 wird das erfindungsgemäße Verfahren und die Weiterverarbeitung der so behandelten Zellulosefasern zu Faserzementprodukten weiter erläutert.

Beispiel 2 :

a) 300 kg ungebleichter Sulfatzellstoff (atro) wurden mit Hilfe eines Pulpers in 9700 l Maschinenwasser (Überwasser vom Klärkreislauf der Plattenmaschine) suspendiert und mittels eines Twin-Flow-Refiners auf einen Mahlgrad von 35°SR aufgemahlen. Die Suspension des gemahlenen Zellstoffs (Stoffkonzentration 3%) wurde mit 2500 kg einer Suspension von KSS im Maschinenwasser (1 Teil KSS auf 4 Teile Maschinenwasser) in einem Intensivmischer 15 min lang gemischt. Dann wurden 120 l einer 1%igen Lösung von Cartaretin 532 zudosiert und weitere 5 min intensiv gemischt. Der so vorbehandelte Zellstoff gelangt dann in eine Vorratsbütte.

b) 1767 kg behandelte Zellstoffsuspension wurden in einem Turbomischer dosiert, 24 kg einer 25%igen Styrolarylatdispersion und 800 l Maschinenwasser zugesetzt und nach 3 min Mischzeit in einen langsam laufenden Mischer übergeführt, wo 110 kg Kalksteinmehl und 560 kg Portlandzement 276 zugesetzt wurden. Diese Mischung wurde 5 min gerührt und umgepumpt und gelangte dann in die Vorratsbütte der Plattenmaschine (Hatschek-Maschine). Dort wurde in bekannter Weise ein Vlies gebildet und mittels einer Formatwalze bis zur gewünschten Dicke aufgewickelt. Das entstehende, zylinderförmige Stück wurde aufgeschnitten, eben ausgebreitet und in Platten gewünschter Dimension gestanzt. Diese wurden auf Blechen abgelegt, gestapelt und anschließend mit einem Druck von 300 bar 20 min lang gepreßt.

Beispiel 3 :

a) 300 kg ungebleichter Sulfatzellstoff wurden in gleicher Weise wie in Beispiel 2a in Maschinenwasser aufbereitet und mit KSS und Flockungsmittel behandelt.

b) 1767 kg dieser Suspension wurden in einen Turbomischer dosiert und mit 500 kg einer Aufschlämmung von 200 kg Polyäthylenfibriden und 80 kg PVA-Faser in 9720 l Maschinenwasser versetzt und 3 min gerührt. Dann wurden 24 kg einer 25%igen Styrolacrylatdispersion und weitere 300 l Maschinenwasser zudosiert und die Mischung weitere 3 min gerührt. Dann wurde die Mischung in einen langsam laufenden Rührer übergeführt,

4

wo 110 kg Kalksteinmehl und 560 kg Portlandzement 275 zugesetzt wurden. Nach 5 min Mischzeit unter Rühren und Umpumpen gelangte die Suspension in die Vorratsbütte der Plattenmaschine (Hatschek-Maschine). Dort wurden in der oben beschriebenen Weise Faserzementplatten hergestellt und anschließend in bekannter Weise zu Wellplatten verformt.

Die erfindungsgemäß mit KSS beladenen Zellulosefasern weisen eine große Oberfläche und ein hohes Zementretentionsvermögen beim Einsatz im Naßverfahren zur Herstellung von Faserzementprodukten auf. Auf der anderen Seite ist ihre Festigkeit und Beständigkeit in der Zementmatrix so gut, daß in erfindungsgemäßen Faserzementprodukten, die durch einen Gehalt an erfindungsgemäß mit KSS beladenen Zellulosefasern gekennzeichnet sind, der Einsatz von organischen eigentlichen Verstärkungsfasern neben den Zellulosefasern unterbleiben kann.

Selbstverständlich stehen derartige Zusätze aber im Belieben des Fachmanns. Die erfindungsgemäßen Faserzementprodukte können weiterhin auch synthetische anorganische Fasern, wie Mineralwolle, Glasfasern, Kohlenstofffasern oder Stahlfasern enthalten. Als organische Verstärkungsfasern sind z.B. Synthesefasern wie Polyester-, Polyvinyl-, Polyvinylalkohol-, Polyäthylen-, Polypropylen-, Polyacrylnitril- und Polyacrylamidfasern zu nennen ; auch Fibride können eingesetzt werden.

In den Ansatzmischungen zur Bildung der erfindungsgemäßen Faserzementprodukte können weiterhin branchenübliche Zusätze und Zuschläge vorhanden sein, so z.B. Füllstoffe wie Glimmer, Vermiculit, Kieselgur, Perlit, Blähton, Diatomit und gemahlener Quarz, kieselsäurehältiger Sand und Flugasche, Färbemittel, Mittel zum Wasserdichtmachen, Abbinde- und Härtungsbeschleuniger wie Kalziumchlorid und Aluminiumsulfat, Flockungsmittel und Dispergiermittel, Filtersubstanzen wie Wollastonit-Kristalle, organische und anorganische Plastifikatoren und Faserdispergiermittel, wie z.B. hydrophile anorganische kolloidale Teilchen wie hydrophile Kieselsäure mit einer spezifischen Oberfläche größer als 100 m²/g, sowie behandelte oder unbehandelte kolloidale Partikelchen.

Ebenso können sich die Prozentsätze in den Ansatzmischungen im üblichen Rahmen bewegen. Es ist z.B. bekannt, Ansatzmischungen zu verarbeiten, die — bezogen auf Trockensubstanz — 5 bis 30% Fasern, 15 bis 50% KSS, 20 bis 80% Kalk und/oder Materialien, die in Gegenwart von Wasser Kalk freisetzen (u.a. Portlandzement) sowie 0 bis 40% Zusätze enthalten.

Selbstverständlich kann der Gehalt der Ansatzmischungen zur Bildung der erfindungsgemäßen Faserzementprodukte an erfindungsgemäß KSS-beladenen Zellulosefasern auch unterhalb von 5%, bezogen auf Trockensubstanz, liegen.

Die erfindungsgemäßen Faserzementprodukte werden nach üblichen Verfahren gewonnen, insbesondere nach dem Naßverfahren grüne Formkörper gebildet, die dann — vorzugsweise nach Pressen und bei erhöhter Temperatur — aushärten gelassen werden. Hiezu ist auch ein Autoklavieren und eine Vorhärtung bekannt, wobei Autoklaventemperaturen zwischen 100 und 240°C, vorzugsweise von 130 bis 190°, üblich sind. Vorhärtungsschritte werden insbesondere bei Temperaturen zwischen 20 und 100°C und relativen Luftfeuchtigkeiten von 60 bis 100% während 6 bis 24 h durchgeführt.

## Patentansprüche

1. Verfahren zur Behandlung von Zellulosefasern, insbesondere Zellstoff, in wässriger Aufschlämmung mit feinteiliger, vorzugsweise kondensierter, Kieselsäure, dadurch gekennzeichnet, daß die Zellulosefasern in einer alkalischen Lösung aufgeschlämmt, Kieselsäure zugegeben und nach deren Verteilung in der Aufschlämmung durch Zugabe eines Polyelektrolyten an und gegebenenfalls in den Fasern fixiert werden.

2. Verfahren nach Anspruch 1, dadurch gekennzeichnet, daß eine alkalische Lösung eingesetzt wird, die einen pH-Wert im Bereich von 10 bis 13 aufweist.

3. Verfahren nach Anspruch 1 oder 2, dadurch gekennzeichnet, daß eine alkalische Lösung eingesetzt wird, die einen Gehalt von 800 bis 1200 mval Kalziumionen aufweist.

4. Verfahren nach einem der Ansprüche 1 bis 3, dadurch gekennzeichnet, daß ein anionischer Polyelektrolyt insbesondere in einer Menge von 0,005 bis 1%, bezogen auf die Aufschlämmung, eingesetz wird.

5. Verfahren nach einem der Ansprüche 1 bis 4, dadurch gekennzeichnet, daß als Polyelektrolyt mindestens eine Verbindung aus den Gruppen wasserlösliche und in Wasser emulgierbare Polymere eingesetzt wird.

6. Verfahren nach Anspruch 5, dadurch gekennzeichnet, daß als Polyelektrolyt mindestens eine Verbindung aus den Gruppen Alginate, Polyacrylate, Polyacrylamide, Polyvinylalkohol, Polysaccharide und Polypeptide eingesetzt wird.

7. Verfahren nach Anspruch 6, dadurch gekennzeichnet, daß als Polyelektrolyt wasserlösliche, mindestens teilweise verseifte Polyacrylamide eingesetzt werden.

8. Verfahren nach Anspruch 6, dadurch gekennzeichnet, daß als Polyelektrolyt Acrylatcopolymeremulsio-

EP 0 331 666 B1

nen eingesetzt werden.

9. Verfahren nach einem der Ansprüche 1 bis 8, dadurch gekennzeichnet, daß der Feststoffgehalt in der Aufschlämmung auf 5 bis 30 g/l eingestellt wird.

10. Verfahren nach einem der Ansprüche 1 bis 9, dadurch gekennzeichnet, daß Kieselsäure mit einem $SiO_2$-Gehalt zwischen 70 und 90% eingesetzt wird.

11. Verfahren nach einem der Ansprüche 1 bis 10, dadurch gekennzeichnet, daß amorphe Kieselsäure mit einer spezifischen Oberfläche von 10 bis 25 m²/g eingesetzt wird.

12. Verfahren nach Anspruch 11, dadurch gekennzeichnet, daß 200 bis 300 Masse-% amorphe Kieselsäure, bezogen auf Zellulosefasern, eingesetzt werden.

13. Verfahren nach einem der Ansprüche 1 bis 12, dadurch gekennzeichnet, daß Zellstoff eingesetzt wird, der vor und/oder während seiner Aufschlämmung in der alkalischen Lösung auf 18 bis 60°SR, vorzugsweise auf 25 bis 40°SR, aufgemahlen wird.

14. Verfahren nach einem der Ansprüche 1 bis 13, dadurch gekennzeichnet, daß Kiefern-Sulfatzellstoff eingesetzt wird.

15. Faserzementprodukte bzw. Mischungen zu ihrer Herstellung, dadurch gekennzeichnet, daß sie einen Gehalt an nach einem der Ansprüche 1 bis 14 behandelten Zellulosefasern aufweisen.


## Claims

1. A process for the treatment of cellulosic fibers, in particular pulp, in aqueous slurry with finely divided, preferably condensed silicic acid, characterized in that the cellulosic fibers are slurried in an alkaline solution, silicic acid is added thereto and they are fixed on and if required within the fibers after their distribution in the slurry by the addition of a polyelectrolyte.

2. The process according to claim 1, characterized in that an alkaline solution having a pH value in the range of 10 to 13 is employed.

3. The process according to claim 1 or 2, characterized in that an alkaline solution with a content of 800 to 1,200 mval of calcium ions is employed.

4. The process according to any one of the claims 1 to 3, characterized in that an anionic polyelectrolyte is used, in particular in an amount of 0.005 to 1 percent based on the slurry.

5. The process according to any one of the claims 1 to 4, characterized in that at least one compound selected from the group of polymers soluble and emulsifyable in water is employed as the polyelectrolyte.

6. The process according to claim 5, characterized in that at least one compound selected from the group of alginates, polyacrylates, polyacrylamides, polyvinyl alcohol, polysaccharides and polypeptides is used as the polyelectrolyte.

7. The process according to claim 6, characterized in that water-soluble and at least partially saponified polyacrylamides are used as the polyelectrolyte.

8. The process according to claim 6, characterized in that acrylate copolymer emulsions are used as the polyelectrolyte.

9. The process according to any one of the claims 1 to 8, characterized in that the solids content in the slurry is adjusted to 5 to 30 g/l.

10. The process according to any one of the claims 1 to 9, characterized in that silicic acid with an $SiO_2$ content of between 70 and 90 percent is employed.

11. The process according to any one of the claims 1 to 10, characterized in that amorphous silicic acid with a specific surface of 10 to 25 m²/g is employed.

12. The process according to claim 11, characterized in that 200 to 300 percent by weight of amorphous silicic acid based on the cellulosic fibers are employed.

13. The process according to any one of the claims 1 to 12, characterized in that pulp ground to 18 to 60°SR, preferably to 25 to 40°SR in the alkaline solution prior to and/or during its slurrying is employed.

14. The process according to any one of the claims 1 to 13, characterized in that pine sulfate pulp is employed.

15. Fiber-containing cement products and mixtures for their production, characterized in that they have a content in cellulosic fibers treated according to any one of the claims 1 to 14.


## Revendications

1. Procédé de traitement de fibres de cellulose, en particulier de pâte, dans une suspension aqueuse avec

6

l'acide silicique finement divisée et de préférence condensée, caractérisé en ce que les fibres de cellulose sont suspendues dans une solution alcaline, l'acide silicique est ajoutée et fixée sur et si nécessaire dans les fibres suivant leur distribution dans la suspension par l'addition d'un polyélectrolyte.

2. Procédé selon la revendication 1, caractérisé en ce que l'on utilise une solution alcaline d'un pH dans le domaine de 10 à 13.

3. Procédé selon la revendication 1 ou 2, caractérisé en ce que l'on utilise une solution alcaline d'une teneur de 800 à 1.200 mval en ions de calcium.

4. Procédé selon une des revendications 1 à 3, caractérisé en ce que l'on utilise un polyélectrolyte anionique en particulier dans une quantité de 0,005 à 1 pourcent par rapport à la suspension.

5. Procédé selon une des revendications 1 à 4, caractérisé en ce que l'on utilise comme polyélectrolyte au moins un compose choisi des groupes des polymères solubles dans l'eau ou émulsifiables dans l'eau.

6. Procédé selon la revendication 5, caractérisé en ce que l'on utilise comme polyélectrolyte au moins un composé choisi des groupes des alginates, des polyacrylates, des polyacrylamides, d'alcool polyvinylique, des polysaccharides et des polypeptides.

7. Procédé selon la revendication 6, caractérisé en ce que l'on utilise comme polyélectrolyte des polyacrylamides solubles dans l'eau et au moins partiellement saponifiés.

8. Procédé selon la revendication 6, caractérisé en ce que l'on utilise comme polyélectrolyte des émulsions de copolymères d'acrylates.

9. Procédé selon une des revendications 1 à 8, caractérisé en ce que la teneur en solides dans la suspension est ajustée à 5 à 30 g/l.

10. Procédé selon une des revendications 1 à 9, caractérisé en ce que l'on utilise de l'acide silicique d'une teneur en $SiO_2$ entre 70 et 90 pourcent.

11. Procédé selon une des revendications 1 à 10, caractérisé en ce que l'on utilise de l'acide silicique amorphe d'une surface spécifique de 10 à 25 m²/g.

12. Procédé selon la revendication 11, caractérisé en ce que l'on utilise de 200 à 300 pourcent en poids d'acide silicique amorphe par rapport aux fibres de cellulose.

13. Procédé selon une des revendications 1 à 12, caractérisé en ce que l'on utilise une pâte broyée à 18 à 60°SR, de préférence 25 à 40°SR, avant et/ou pendant sa suspension dans la solution alcaline.

14. Procédé selon une des revendications 1 à 13, caractérisé en ce que l'on utilise de la pâte de sulfate de pin.

15. Produits de ciment contenant des fibres ou mélanges pour leur fabrications, caractérisés en ce qu'ils contiennent des fibres de cellulose traitées selon une des revendications 1 à 14.